(19)

Europäisches Patentamt
European Patent Office
Office européen des brevets

(11) **EP 3 112 969 A1**

(12) **EUROPEAN PATENT APPLICATION**

(43) Date of publication:
04.01.2017 Bulletin 2017/01

(51) Int Cl.:
**G05D 1/02** (2006.01)

(21) Application number: **16177023.5**

(22) Date of filing: **29.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.07.2015 KR 20150095075**

(71) Applicant: **Korea Advanced Institute of Science and Technology**
**Daejeon 34141 (KR)**

(72) Inventors:
• MYEONG, Hyeon
  34141 Daejeon (KR)
• JUNG, Jong Dae
  34141 Daejeon (KR)

(74) Representative: **EIP**
**Fairfax House**
**15 Fulwood Place**
**London WC1V 6HU (GB)**

(54) **METHOD AND APPARATUS FOR RELOCATION OF MOBILE ROBOT IN INDOOR ENVIRONMENT**

(57)     A method and apparatus for relocation of a mobile robot is provided. The relocation method includes the steps of generating a fingerprint based on a previously built magnetic field map, and if the mobile robot is determined as being failed in localization, relocating a location of the mobile robot based on the generated location fingerprint. The step of generating the location fingerprint includes the step of generating the location fingerprint based on the magnetic field map and location measurement values for the mobile robot that are previously measured by a radio source.

FIG. 8

```
                    ┌─────────┐
                    │  Start  │
                    └─────────┘
                         │
                         ▼
┌──────────────────────────────────────────────────────┐
│ Obtain magnetic field value along moving route of      │── S1010
│ mobile robot and measurement value based on signal     │
│ transmitted from radio source                           │
└──────────────────────────────────────────────────────┘
                         │
                         ▼
┌──────────────────────────────────────────────────────┐
│ Build magnetic field map through SLAM based            │── S1020
│ on the magnetic field value                            │
└──────────────────────────────────────────────────────┘
                         │
                         ▼
┌──────────────────────────────────────────────────────┐
│ Generate location fingerprint using the built          │── S1030
│ magnetic field value and the measurement value         │
└──────────────────────────────────────────────────────┘
                         │
         S1040           ▼
            ◇─────────────────────────────◇   No
            ◇     Localization failed?      ◇─────
            ◇─────────────────────────────◇
                         │ Yes
                         ▼
┌──────────────────────────────────────────────────────┐
│ Relocate location of mobile robot based on the         │── S1050
│ location fingerprint                                   │
└──────────────────────────────────────────────────────┘
                         │
                         ▼
                    ┌─────────┐
                    │   End   │
                    └─────────┘
```

**Description**

**CROSS-REFERENCE TO RELATED APPLICATION(S)**

This application claims the benefit under 35 U.S.C. § 119(a) of a Korean patent application filed on July 3, 2015 in the Korean Intellectual Property Office and assigned Serial number 10-2015-0095075, the entire disclosure of which is hereby incorporated by reference.

**TECHNICAL FIELD**

Embodiments of the present disclosure relate to a method and apparatus for relocation of a mobile robot in an indoor environment, and more particularly, to a method and apparatus for relocation of a mobile robot based on a previously built magnetic field map and values measured by a radio source.

**BACKGROUND**

Robots could be named as automatic dolls which are assembled with mechanical components in human-shaped dolls and made to operate with hands and feet and other parts likewise the human. In recent years, the concept of robots becomes extended to generically include automatic devices, universally named, which autonomously perform some tasks nevertheless of human likeness thereof.

Mobile robots are being highly spotlighted in the art because they can perform many tasks instead of persons in ultimate environments or dangerous spots. Besides, there are increasingly popularized home-specific mobile robots, such as cleaning robots, which are autonomously moving around to help household affairs in houses. For autonomous tasks, self localization technology is requisite for mobile robots. The typical localization technology is Simultaneous Localization And Mapping (SLAM). SLAM is a localization method for estimating an absolute location of itself, while framing a map corresponding to a task execution space, by detecting environmental information through a robot and by processing the detected information. A mobile robot may estimate its location through the SLAM method using different sensors in a complex indoor environment and may build an indoor environment map.

However, it could be inevitable for general mobile robots to increase errors of information obtained from unpredictable movement when users shift robots to some locations, and to result in very incorrect localization. For this case, it could be necessary to have a function of relocation for regaining locations of mobile robots.

**SUMMARY**

Aspects of the present disclosure are to address at least the above-mentioned problems and/or disadvantages and to provide at least the advantages described below. Accordingly, an aspect of the present disclosure is to provide a method and apparatus for relocation of a mobile robot based on a previously built magnetic field map and values measured by a radio source.

In accordance with an aspect of the present disclosure, a relocation method for a mobile robot may include the steps of generating a fingerprint based on a previously built magnetic field map, and if the mobile robot is determined as being failed in localization, relocating a location of the mobile robot based on the generated location fingerprint.

The step of generating the location fingerprint may include the step of generating the location fingerprint based on the magnetic field map and location measurement values for the mobile robot that are previously measured by a radio source.

The step of generating the location fingerprint may include the step of generating the location fingerprint using magnetic field average values and standard deviations respective to a plurality of cells, and average values and standard deviations for the measurement values.

The step of generating the location fingerprint may include the step of generating the location fingerprint using magnetic field average values and standard deviations respective to the plurality of cells.

The step of relocating the location of the mobile robot may include the step of relocating the location of the mobile robot through a particle filter based approaching method including an MCL algorithm, or relocating the location of the mobile robot through an MLP based approaching method.

The step of relocating the location of the mobile robot may include the step of, if a current location of the mobile robot is out of a specific error range, determining that the localization is failed and relocating the location of the mobile robot based on the generated location fingerprint.

In accordance with another aspect of the present disclosure, a relocation method for a mobile robot may include the steps of obtaining magnetic field values along a moving route of a mobile robot and measurement values based on a signal transmitted from a radio source, building a magnetic field map through SLAM based on the obtained magnetic field values, generating a location fingerprint using the built magnetic field map and the measurement values, and if the mobile robot is determined as being failed in localization, relocating a location of the mobile robot based on the generated location fingerprint.

In accordance with still another aspect of the present disclosure, a relocation apparatus for a mobile robot may include a fingerprint generation part configured to generate a location fingerprint based on a previously built magnetic field map; and a relocation part configured to relocate a location of a mobile robot based on the generated location fingerprint if the mobile robot is determined as being failed in localization.

The fingerprint generation part may generate the location fingerprint based on the magnetic field map and location measurement values of the mobile robot that are previously measured by a radio source.

The fingerprint generation part may generate the location fingerprint using magnetic field average values and standard deviations respective to a plurality of cells, and average values and standard deviations for the measurement values. The fingerprint generation part may generate the location fingerprint using magnetic field average values and standard deviations respective to the plurality of cells.

The relocation part may relocate the location of the mobile robot through a particle filter based approaching method including an MCL algorithm, or may relocate the location of the mobile robot through an MLP based approaching method.

The relocation part may determine that the localization is failed, if a current location of the mobile robot is out of a specific error range, and may relocate the location of the mobile robot based on the generated location fingerprint.

According to embodiments of the present disclosure, it may be accomplishable to perform mobile robot relocation based on a previously built magnetic field map and values measured by a radio source.

According to embodiments of the present disclosure, the relocation as a core technology of continuous navigation may be useful to secure the marketability in connection with the field of mobile robots for indoor cleaning, service, risk area investigation, and so on.

According to embodiments of the present disclosure, by using localization signals with magnetic field values, which are present in an indoor environment, and wireless communication based measurement values, i.e., distance values, it may be allowable to extend a range of application. Additionally, by directly utilizing observation values respective to signals for localization, it may be unnecessary to prepare additional calibration or sense modeling.

Other aspects, advantages, and salient features of the disclosure will become apparent to those skilled in the art from the following detailed description, which, taken in conjunction with the annexed drawings, discloses various embodiments of the present disclosure.

## BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is block diagram illustrating a configuration of a relocation apparatus for a mobile robot according to an embodiment of the present disclosure;
FIG. 2 is an exemplary diagram schematically illustrating an MLP structure;
FIGS. 3A to 3C are exemplary graphic diagrams showing MCL relocation results according to parameters;
FIGS. 4A and 4B are exemplary graphic diagrams showing MLP relocation results according to parameters;
FIGS. 5 to 7 are exemplary diagrams illustrating MLP results according to loci of a mobile robot; and
FIG. 8 is a flow chart showing a relocation method of a mobile robot according to an embodiment of the present disclosure.

## DETAILED DESCRIPTION

Hereinafter, various embodiments of the present disclosure will be described in conjunction with the accompanying drawings. Various embodiments described herein, however, may not be intentionally confined in specific embodiments, but should be construed as including diverse modifications, equivalents, and/or alternatives. With respect to the descriptions of the drawings, like reference numerals refer to like elements.

Embodiments of the present disclosure may be summarized in relocation of a mobile robot based on a previously built magnetic field map and values which are measured by a radio source in an indoor environment.

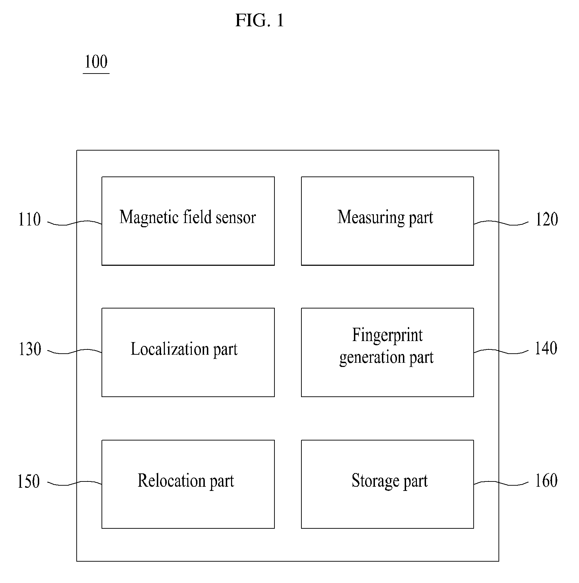

FIG. 1 is block diagram illustrating a configuration of a relocation apparatus for a mobile robot according to an embodiment of the present disclosure.

Referring to FIG. 1, a relocation apparatus 100 for a mobile robot according to an embodiment of the present disclosure may include a magnetic field sensor 110, a measuring part 120, a localization part 130, a fingerprint generation part 140, a relocation part 150, and a storage part 160.

The magnetic field sensor 110 may be used as a sensor for measuring the geomagnetic field at a location of a mobile robot on which one or two sensor magnetic field sensors are mounted. The magnetic field sensor may obtain magnetic field values along a moving route of a mobile robot.

In the case that two magnetic field sensors are mounted on a mobile robot and one of the magnetic field sensors are failed in localization that is an SLAM process, for example, in the case that a mobile robot moves along a cell boundary, the other of the magnetic field sensors may be used for the SLAM process and thereby the SLAM process may be improved in performance. Although two magnetic field sensors can be mounted on a mobile robot for improvement of SLAM performance, embodiments of the present disclosure may not be restrictive hereto and one or a plurality of magnetic field sensors may be mounted on a mobile robot.

The measuring part 120 may obtain measurement values based on a signal which is transmitted from a radio source.

A radio source may include Wi-Fi. Bluetooth, or active Radio-Frequency Identification (RFID) and may transmit a signal at any location in an indoor environment. The measuring part 120 may receive a signal from a radio source and may obtain a distance value from a current cell to the radio source.

The measuring part 120 may obtain distance values while a mobile robot is performing an SLAM process and then may store the obtained distance values in the storage part.

The localization part 130, as an element for recognizing a location of a mobile robot, may build a magnetic field map along a moving route or loci of a mobile robot through an SLAM process based on magnetic field values obtained by the magnetic field sensor, and may estimate its location through the SLAM process.

The localization part 130 may even estimate a location of a mobile robot through a graphic structure based SLAM, or also through other various ways for localization.

The localization part 130 may estimate a location of a mobile robot through an SLAM process for indoor spaces divided into a plurality of cells. Signal values, i.e., magnetic field values, of nodes formed at corners respective to cells may be undated based on localization values of a mobile robot.

As the present disclosure is focused on relocation that repeatedly estimates a location of a mobile robot in the case that the mobile robot is failed in localization, the localization through SLAM will not be further described.

The fingerprint generation part 140 may generate a location fingerprint (or location signature) based on a magnetic map which is previously built along a moving route or loci of a mobile robot.

The fingerprint generation part 140 may generate a fingerprint based on a previously built magnetic map and location values of a mobile robot which are obtained by the measuring part 120.

The fingerprint generation part 140 may even generate a location fingerprint using average magnetic field values and standard deviations respective to a plurality of cells, or may even generate a location fingerprint using average magnetic field values and standard deviations respective to a plurality of cells, and average values and standard deviations for measurement values, i.e., distance values, respective to a plurality of cells.

To allow relocation of a mobile robot in order to prevent ambiguity of magnetic field values in an indoor environment, the fingerprint generation part 140 may generate a location fingerprint in additional consideration of distance values measured by a radio source.

In the case that a mobile robot is failed in localization, i.e., in the case that localization is determined as being failed, the relocation part 150 may relocate a location of the mobile robot based on a location fingerprint which is given by the fingerprint generation part 140.

In the case that a current location of a mobile robot is out of a specific error range, for example, in the case that a wheel slip overly occurs at a mobile robot which is moving, a mobile robot is shut in an obstacle, or a user kidnaps a mobile robot to some place while it is moving, the relocation part 150 may determine that the mobile robot is failed in localization.

In an SLAM process using a mobile robot, it needs to continuously maintain a current location of the mobile robot within an error range in recursive characteristics of the operation. In the case that localization is failed due to a special condition, the relocation part may relocate a location of a mobile robot using a location fingerprint.

The relocation part 150 may even relocate a location of a mobile robot using a particle filter based approaching method including Monte Carlo Localization (MCL), or using a MutiLayer Perception (MLP).

The storage part 160 may store all information and data about relocation.

The storage part 160 may store all data such as a magnetic map built by SLAM, location values of a mobile robot (or distance values), algorithms for relocation, and so on.

The relocation apparatus 100 according to embodiments of the present disclosure may further include an encoder for obtaining odometry information of a mobile robot.

An encoder may detect a rotation speed and direction of a mobile robot and may obtain odometry information using the detected data of rotation speed and direction of the mobile robot. Odometry information may even include X-axis and Y-axis values, and an angle of a moving direction on a mobile robot.

Now the cases of relocating a location of a mobile robot using 1) an MCL algorithm, and 2) an MLP algorithm will be described below.

1) Relocation for mobile robot using MCL algorithm

MCL, as one of particle filter based approaching methods, is almost similar to Rao-Blackwellized Particle Filter (RBPF) in prediction and update equation. This similarity is because RBPF employs a particle filter to robot state update. A difference between MCL and RBPF is that the RBPF recursively updates a map state while the MCL depends on static map information.

In a classic MCL algorithm, it may be assumed that a constant error covariance is used for measurement update and a deviation of sensor measurement is independent from a measured location. Because such an assumption is invalid in a noisy indoor environment, it must consider location dependence of error covariance. To this end, specific statistics need to be encoded into a greed level during an SLAM process. The encoded statistics may include average values and standard deviations for magnetic field values respective to a plurality of cells, and average values and standard deviations for distance values respective to a plurality of cells. Average values and deviations for magnetic field values may be given from magnetic field values measured by a single magnetic field sensor, or by two magnetic field sensors disposed in different locations.

If a mobile robot is staying in a k'th cell, sensor measurement values may be collected. If the mobile robot moves out of the corresponding cell, a location fingerprint matrix $A^k$ may be given in Equation 1.

[Equation 1]

$$\Lambda^k = \left[\, \lambda_\mu^k \mid \lambda_\sigma^k \,\right]$$
$$= \begin{bmatrix} \mu_m^k & \sigma_m^k \\ \mu_r^k & \sigma_r^k \end{bmatrix}$$

In Equation 1, $m$ and $r$ denote a magnetic field and radio data, respectively, and $\mu_{(\cdot)}^k$ and $\sigma_{(\cdot)}^k$ denote an average and a deviation of measurement values.

Each element of the location fingerprint matrix may be given in Equation 2.

[Equation 2]

$$\mu_m^k = \left[\, \mu_{B_z^1} \quad \mu_{\|B^1\|} \quad \mu_{B_z^2} \quad \mu_{\|B^2\|} \,\right]^T$$
$$\mu_r^k = \left[\, \mu_{r^1} \quad \ldots \quad \mu_{r^q} \,\right]^T$$
$$\sigma_m^k = \left[\, \sigma_{B_z^1} \quad \sigma_{\|B^1\|} \quad \sigma_{B_z^2} \quad \sigma_{\|B^2\|} \,\right]^T$$
$$\sigma_r^k = \left[\, \sigma_{r^1} \quad \ldots \quad \sigma_{r^q} \,\right]^T$$

In Equation 2, B includes Bx, By, and Bz. Bx, By and Bz denote orthogonal components of a magnetic field vector. The subscripts of B, 1 and 2, denote two magnetic field sensors, respectively. The parameter $q$ denotes the number of radio-raging beacons.

In relocation phase, a particle $\{x_t^i\}$ with a weight $\{\gamma_t^i\}$ may be initialized, each particle may be shifted by kinematics of a mobile robot, and the weight may be updated by a measurement value $\zeta_t$. The measurement value may be given in Equation 3.

[Equation 3]

$$\zeta_t = \begin{bmatrix} \mathbf{m}_L^1 \\ \mathbf{m}_L^2 \\ \mathbf{r} \end{bmatrix}$$

In Equation 3, $\mathbf{m}_L^j = [B_\zeta^j, \|B^j\|]^T$ means a vector relating to a j'th magnetic field sensor reading and $r = [r_1,... r_q]^T$ means a radio range vector.

Weight update may be given in Equation 4.

[Equation 4]

$$\gamma_t^i = \gamma_{t-1}^i \frac{1}{\sqrt{2\pi|\mathbf{R}_k^i|}} \exp\left[-\frac{1}{2}(\tilde{v}_t^i)^T (\mathbf{R}_k^i)^{-1} \tilde{v}_t^i\right]$$

In Equation 4, $\tilde{v}_t^i = \zeta_t^i - \lambda_\mu^k$ means a measurement residual in a cell index k of an i'th particle and $\mathbf{R}_k^i = \mathrm{diag}([\lambda_\sigma^k])$ means a noise covariance matrix of the i'th particle.

An estimated location of a mobile robot may be calculated with a weighted sum of particles.

Accordingly, the relocation part may relocate a location of a mobile robot through the aforementioned MCL algorithm.

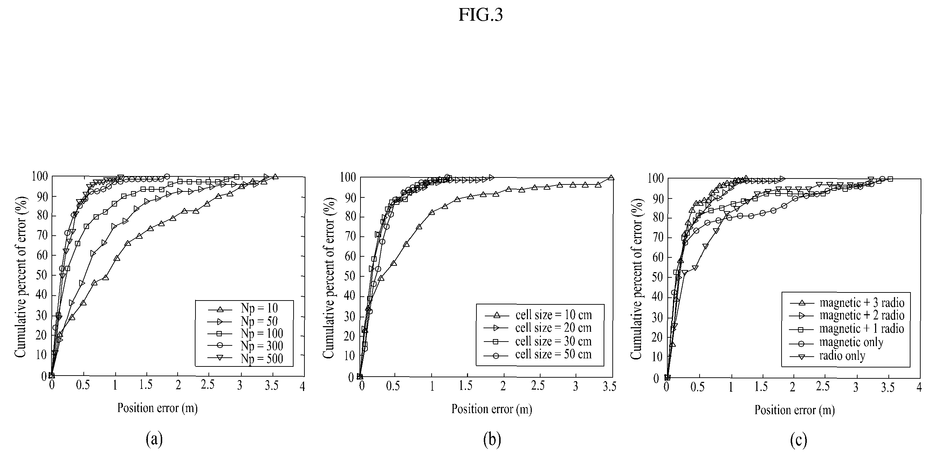

FIGS. 3A to 3C are exemplary graphic diagrams showing MCL relocation results according to parameters. It can be seen from FIG. 3A that MCL performance becomes better as large as a particle size. It can be seen from FIG. 3B that MCL performance abruptly degrades to cell sizes smaller than 10 cm. additionally, it can be seen from FIG. 3C that MCL performance becomes better with the larger numbers of magnetic field values and ranging sensors than only with a radio source or only with magnetic field values.

2) Relocation for mobile robot using MLP algorithm

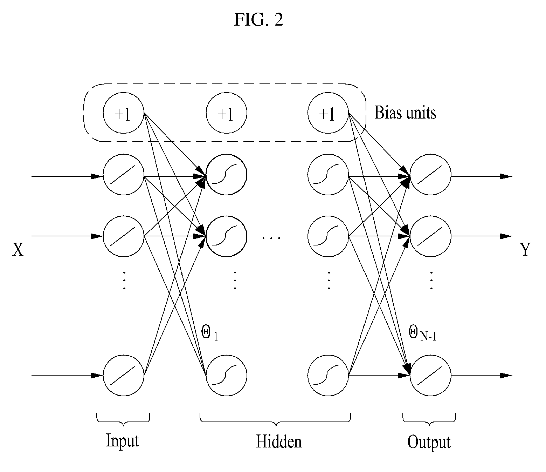

FIG. 2 is an exemplary diagram schematically illustrating an MLP structure. An MLP structure may have one input layer, one or more hidden layers, and one output layer. A hidden layer may have sigmoid activation units and other layers may have linear activation units. The numbers of input and output units may be determined by dimensions of an input characteristic vector X and an output vector Y.

In embodiments of the present disclosure, an input characteristic vector X may correspond to a location fingerprint and an output vector Y may correspond to a second-dimensional location of a relocated mobile robot. Determining a hidden structure with the number of hidden layers and the number of activation units at each layer may be guided through nonlinearity of the problem and may be fixed on a validation data set.

An MLP training may be completed through a conventional error back-propagation algorithm. Optimized frameworks may be employed to adopt a classic gradient descent method and a conjugate gradient method. These two methods need a definition about an MLP cost function J(Θ). The MLP cost function J(Θ) may be given in Equation 5.

[Equation 5]

$$J(\Theta) = \frac{1}{2m} \sum_{i=1}^{m} \|Y^{(i)} - h_\Theta(X^{(i)})\|$$

In Equation 5, θ denotes a matrix including weight information of MLP units, *m* denotes the number of training data sets, and $h_\Theta(\cdot)$ denotes a resultant MLP output.

The training may be completed through one of a batch mode or a stochastic mode.

Data trained in an MLP algorithm may be a location fingerprint. A location fingerprint used in an MLP algorithm may be even generated using only average values and standard deviations of magnetic field values, may be all of magnetic field values built in a magnetic field map, or may be even generated using average values and standard deviations of magnetic field values and average values and standard deviations for distance values. Summarily, by using an MLP algorithm to perform the training between sensor values and locations, the relocation part may immediately find a relocated location if there is an input of sensor value based on a result of the training.

As such, the relocation part may relocate a location of a mobile robot using the aforementioned MLP algorithm.

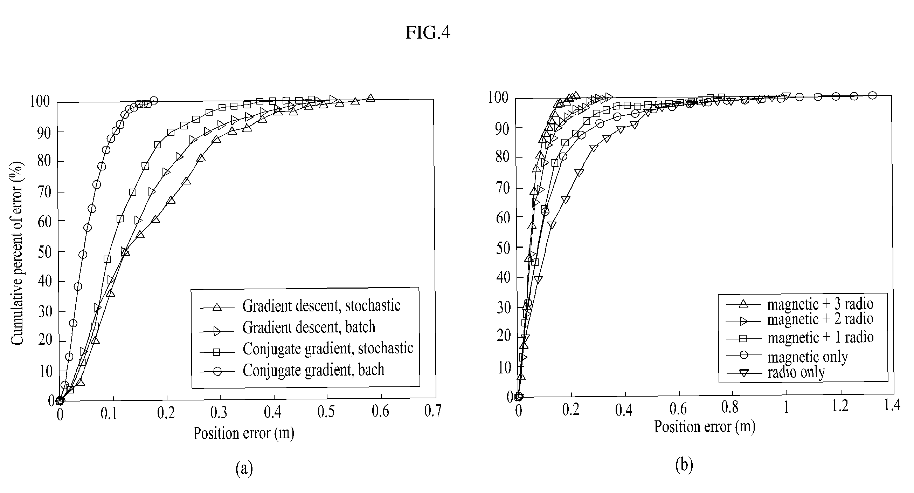

FIGS. 4A and 4B are exemplary graphic diagrams showing MLP relocation results according to parameters.

FIG. 4A shows MLP relocation results to diverse training schemes. It can be seen from FIG. 4A that the conjugate gradient method is superior to the classic gradient descent method in performance for both the batch mode and the stochastic mode. Additionally, it can be seen that there is some tradeoff between a training time and training performance in two approaching methods for the batch mode and the stochastic mode.

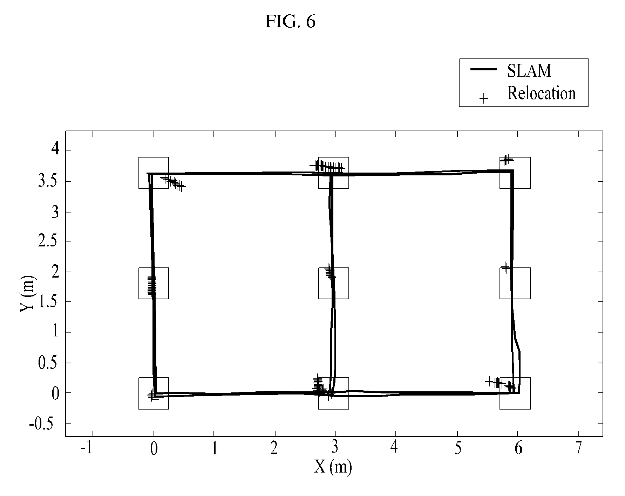

FIG. 4B shows performance differences of MLP results for applications of different sensor sets. It can be seen from FIG. 6B that using both magnetic field values and distance values is more improved in performance than using one of the magnetic field values and the distance values.

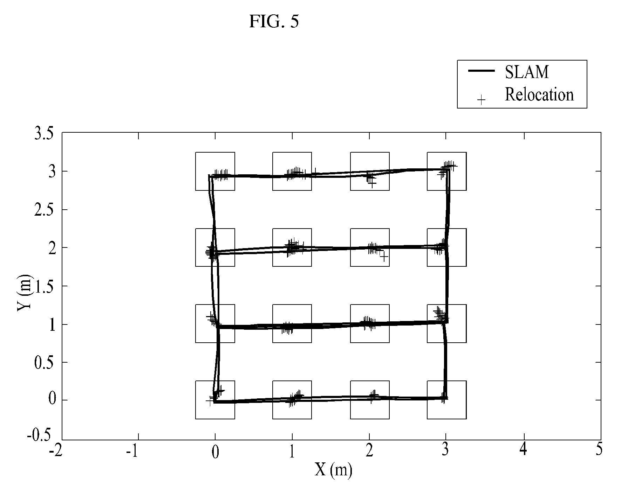

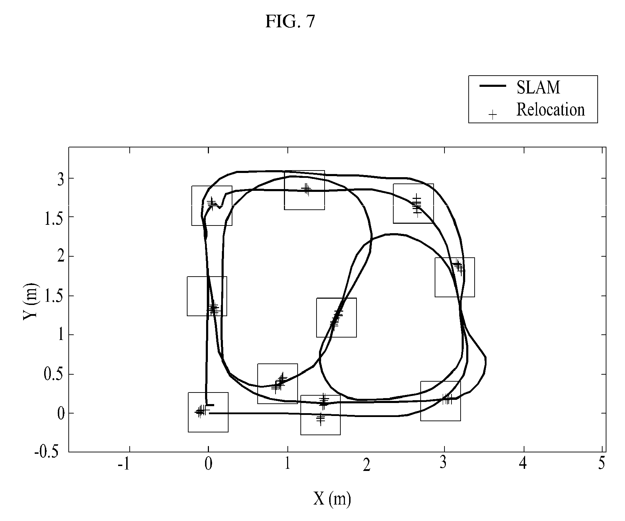

FIGS. 5 to 7 are exemplary diagrams illustrating MLP results according to loci of a mobile robot, resulting from tests in specific environments.

In FIGS. 5 to 7, the lines indicate an SLAM route of collecting MLP training data for relocation of a mobile robot and the cross markers indicate estimated locations of a relocated mobile robot.

Magnetic field SLAM may obtain a corrected orientation without assistance of a heading device. This is because a heading state of a mobile robot can be corrected by measurement values which may affect weight updating equations and calculation of covariance matrix.

From the relocation results of FIGS. 5 to 7, it can be seen that estimated locations of relocation are correctly positioned on SLAM moving loci and Root Mean Square Errors (RMSE) for the estimated locations respective to data sets are $0.06 \pm 0.03$, $0.08 \pm 0.11$, and $0,07 \pm 0.01$ m.

As described above, a relocation apparatus for a mobile robot according to an embodiment of the present disclosure may relocate a location of the mobile robot based on a preciously built magnetic field values and values measured by a radio source.

Additionally, a relocation apparatus for a mobile robot according to an embodiment of the present disclosure may operate in very large area by using magnetic field values distributed in an indoor environment and wireless communication based measurement values, i.e., distance values, and may not need an additional calibration or sensor modeling by using observation values of signals for localization.

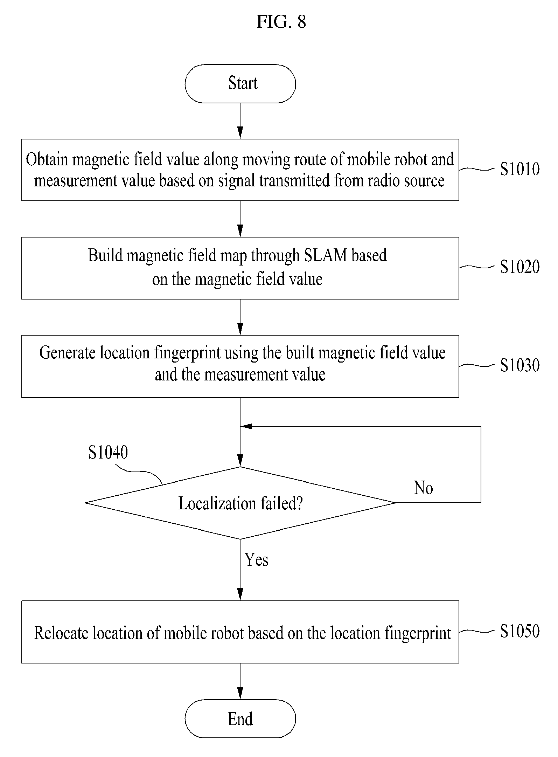

FIG. 8 is a flow chart showing a relocation method of a mobile robot according to an embodiment of the present disclosure, which is an operation flow in the relocation apparatus of FIG. 1.

Referring to FIG. 8, a relocation method according to an embodiment of the present disclosure may magnetic field values along a moving route of a mobile robot through at least one magnetic field sensor, and may obtain measurement values, e.g., distance values, based on a signal transmitted from a radio source (step S1010).

In the case that two magnetic field sensors are mounted on a mobile robot, since an SLAM process can be performed through one magnetic field sensor even if the other of the magnetic field sensors is failed during a localization process, e.g., during the SLAM process, for the mobile robot, it may be possible to stabilize and improve SLAM performance.

A radio source for obtaining distance values at the step S1010 may include WiFi. Bluetooth, or active RFID, and may transmit a signal at some location in an indoor environment. Accordingly, it may be allowable to obtain a current location of a mobile robot or a distance value from a current cell to the radio source, based on a signal transmitted from a radio source.

Then, a magnetic field map may be built through an SLAM process based on the magnetic field values obtained at the step S1010. The built magnetic field values and distance values may be used to generate a location fingerprint (steps S1020 and S1030).

At the step S1030, a location fingerprint may be even generated using magnetic field average values and standard deviations respective to a plurality of cells, and average values and standard deviations for measurement values, e.g., distance values, respective to the plurality of cells.

At the step S1030, a location fingerprint may be even generated using magnetic field average values and standard deviations respective to a plurality of cells. On the other hand, there may be ambiguity for magnetic field values in an indoor environment. Such ambiguity may be overcome by additionally considering distances which are measured by a radio source, i.e., measurement values, in generating a location fingerprint.

In the case that localization, while a mobile robot is moving after generation of the location fingerprint by the step S 1030, is determined as being failed, a location of the mobile robot may be relocated based on the location fingerprint generated by the step S130 (steps S1040 and S1050).

At the step S1030, it may be possible to determine as localization for a mobile robot is failed in the case that the mobile robot is out of a specific error range, for example, in the case that a wheel slip overly occurs while a mobile robot is moving, a mobile robot is shut in an obstacle, or a user kidnaps a mobile robot to some place while it is moving.

At the step S1050, it may be allowable even to relocate a location of a mobile robot by using a particle filter based approaching method including the MLC algorithm, or by using an MLC based approaching method.

At the step S1050, in the case of relocating a location of a mobile robot through an MCL algorithm, it may be permissible to use both measured magnetic field values and distance values. In the case of relocating a location of a mobile robot through an MLP based approaching method, it may be permissible even to use only measured magnetic field values, or to use both measured magnetic field values and distance values.

While embodiments of the present disclosure have been shown and described with reference to the accompanying drawings thereof, it will be understood by those skilled in the art that various changes and modifications in form and details may be made therein without departing from the spirit and scope of the present disclosure as defined by the appended claims and their equivalents. For example, it may be allowable to achieve desired results although the embodiments of the present disclosure are preformed in other sequences different from the descriptions, and/or the elements, such as system, structure, device, circuit, and so on, are combined or assembled in other ways different from the descriptions, replaced or substituted with other elements or their equivalents.

Therefore, other implementations, other embodiments, and equivalents of the appended claims may be included in the scope of the appended claims.

**Claims**

1. A relocation method for a mobile robot, the relocation method comprising:

   generating a fingerprint based on a previously built magnetic field map; and
   if the mobile robot is determined as being failed in localization, relocating a location of the mobile robot based on the generated location fingerprint.

2. The relocation method of claim 1, wherein the generating of the location fingerprint comprises:

   generating the location fingerprint based on the magnetic field map and location measurement values for the mobile robot that are previously measured by a radio source.

3. The relocation method of claim 2, wherein the generating of the location fingerprint comprises:

   generating the location fingerprint using magnetic field average values and standard deviations respective to a plurality of cells, and average values and standard deviations for the measurement values, or generating the location fingerprint using magnetic field average values and standard deviations respective to the plurality of cells.

4. The relocation method of claim 1, wherein the relocating of the location of the mobile robot comprises:

   relocating the location of the mobile robot through a particle filter based approaching method including an MCL(Monte Carlo localization) algorithm.

5. The relocation method of claim 1, wherein the relocating of the location of the mobile robot comprises:

   relocating the location of the mobile robot through an MLP(multilayer perceptron) based approaching method.

6. The relocation method of claim 1, wherein the relocating of the location of the mobile robot comprises:

   if a current location of the mobile robot is out of a specific error range, determining that the localization is failed and relocating the location of the mobile robot based on the generated location fingerprint.

7. A relocation apparatus for a mobile robot, the relocation apparatus comprising:

   a fingerprint generation part configured to generate a location fingerprint based on a previously built magnetic field map; and
   a relocation part configured to relocate a location of a mobile robot based on the generated location fingerprint if the mobile robot is determined as being failed in localization.

8. The relocation apparatus of claim 7, wherein the fingerprint generation part is configured to generate the location fingerprint based on the magnetic field map and location measurement values of the mobile robot that are previously measured by a radio source.

9. The relocation apparatus of claim 8, wherein the fingerprint generation part is configured to generate the location fingerprint using magnetic field average values and standard deviations respective to a plurality of cells, and average values and standard deviations for the measurement values, or to generate the location fingerprint using magnetic field average values and standard deviations respective to the plurality of cells.

10. The relocation apparatus of claim 7 wherein the relocation part is configured to relocate the location of the mobile robot through a particle filter based approaching method including an MCL algorithm.

11. The relocation apparatus of claim 7, wherein the relocation part is configured to relocate the location of the mobile robot through an MLP based approaching method.

12. The relocation apparatus of claim 7, wherein the relocation part is configured to determine that the localization is failed, if a current location of the mobile robot is out of a specific error range, and to relocate the location of the mobile robot based on the generated location fingerprint.

FIG. 1

100

| | |
|---|---|
| Magnetic field sensor | Measuring part |
| Localization part | Fingerprint generation part |
| Relocation part | Storage part |

110 — Magnetic field sensor

120 — Measuring part

130 — Localization part

140 — Fingerprint generation part

150 — Relocation part

160 — Storage part

FIG. 2

FIG.3

(a)

(b)

(c)

FIG.4

(a)

(b)

FIG. 5

FIG. 6

FIG. 7

FIG. 8

```
                          ┌─────────┐
                          │  Start  │
                          └─────────┘
                               │
                               ▼
┌──────────────────────────────────────────────────────────┐
│ Obtain magnetic field value along moving route of mobile  │ ─── S1010
│ robot and measurement value based on signal transmitted   │
│ from radio source                                          │
└──────────────────────────────────────────────────────────┘
                               │
                               ▼
┌──────────────────────────────────────────────────────────┐
│     Build magnetic field map through SLAM based           │ ─── S1020
│            on the magnetic field value                     │
└──────────────────────────────────────────────────────────┘
                               │
                               ▼
┌──────────────────────────────────────────────────────────┐
│ Generate location fingerprint using the built magnetic     │ ─── S1030
│      field value and the measurement value                 │
└──────────────────────────────────────────────────────────┘
                               │
       S1040                   ▼
                      ◇─────────────────◇         No
                     ◇  Localization failed? ◇ ─────────┐
                      ◇─────────────────◇               │
                               │ Yes                     │
                               ▼                         │
┌──────────────────────────────────────────────────────────┐
│ Relocate location of mobile robot based on the location    │ ─── S1050
│ fingerprint                                                │
└──────────────────────────────────────────────────────────┘
                               │
                               ▼
                          ┌─────────┐
                          │   End   │
                          └─────────┘
```

Europäisches
Patentamt

European
Patent Office

Office européen
des brevets

## EUROPEAN SEARCH REPORT

**Application Number**

EP 16 17 7023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/084012 A2 (UNIV SUNGKYUNKWAN FOUND [KR]; CHOI HYOUK RYEOL [KR]; KOO JA CHOON [KR]) 14 July 2011 (2011-07-14) | 1,2,7,8 | INV. G05D1/02 |
| Y | * the whole document * | 3-6,9-12 | |
| X | US 2012/109420 A1 (LEE HYOUNG-KI [KR] ET AL) 3 May 2012 (2012-05-03) | 1,7 | |
| Y | * the whole document * | 2-6,8-12 | |
| Y | EP 2 772 815 A2 (SAMSUNG ELECTRONICS CO LTD [KR]) 3 September 2014 (2014-09-03) * the whole document * | 1-12 | |
| Y | US 2012/203453 A1 (LUNDQUIST CHRISTIAN [SE] ET AL) 9 August 2012 (2012-08-09) * the whole document * | 1-12 | |
| Y | JI HYOUNG RYU ET AL: "A Review on Sensor Network Issues and Robotics", JOURNAL OF SENSORS, vol. 24, no. 2, 1 January 2015 (2015-01-01), pages 393-14, XP055318652, US ISSN: 1687-725X, DOI: 10.1177/0278364908095841 * the whole document * | 1-12 | |

**TECHNICAL FIELDS SEARCHED (IPC)**

G05D

The present search report has been drawn up for all claims

| Place of search | Date of completion of the search | Examiner |
|---|---|---|
| Munich | 11 November 2016 | Lalinde, Rafael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 7023

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2016

| Patent document cited in search report | | Publication date | Patent family member(s) | | Publication date |
|---|---|---|---|---|---|
| WO 2011084012 | A2 | 14-07-2011 | KR 20110081452 A<br>WO 2011084012 A2 | | 14-07-2011<br>14-07-2011 |
| US 2012109420 | A1 | 03-05-2012 | KR 20120045929 A<br>US 2012109420 A1 | | 09-05-2012<br>03-05-2012 |
| EP 2772815 | A2 | 03-09-2014 | CN 104316050 A<br>EP 2772815 A2<br>KR 20140108821 A<br>US 2014244094 A1 | | 28-01-2015<br>03-09-2014<br>15-09-2014<br>28-08-2014 |
| US 2012203453 | A1 | 09-08-2012 | EP 2673593 A1<br>KR 20140093896 A<br>US 2012203453 A1<br>US 2013311084 A1<br>WO 2012107268 A1 | | 18-12-2013<br>29-07-2014<br>09-08-2012<br>21-11-2013<br>16-08-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150095075